# EUROPEAN PATENT APPLICATION

(11) **EP 2 688 266 A1**
(43) Date of publication of application: **22.01.2014**
(21) Application number: 13189182.2
(22) Date of filing: 09.04.2008
(51) Int. Cl.: H04L 29/06, H04W 12/06, H04W 36/14

(54) **Systems and methods for currency querying**

(30) Priority: 09.04.2007 US 910820 P; 09.03.2008 US 44978
(62) Divisional of application: 08740468.7
(71) Applicant: Kabushiki Kaisha Toshiba, Tokyo 105-8001 (JP); Telcordia Technologies, Inc., Piscataway, NJ 08854-4157 (US)
(72) Inventor: Oba, Toshihiro, Piscataway, NJ New Jersey 08854-4151 (US); Cheng, Yuu-Heng Alice, Piscataway, NJ New Jersey 08854 (US)
(74) Representative: Granleese, Rhian Jane

(57) **Abstract**

A method for providing network information regarding access networks to which a mobile node may access, comprising: a) receiving a query of a mobile node related to cost of networks to which the mobile node may access; b) converting a currency to a converted currency for the mobile node related to the cost of at least one of the access networks to which the mobile node may access by a currency conversion mechanism; c) sending the network information for the mobile node including the converted currency.

## Description

### Technical Field

The present invention relates to wireless communications and in particular to, inter alia, methods and systems for addressing currency issues of a mobile node prior to accessing a network.

### Background Art

Networks and Internet Protocol:

There are many types of computer networks, with the Internet having the most notoriety. The Internet is a worldwide network of computer networks. Today, the Internet is a public and self-sustaining network that is available to many millions of users. The Internet uses a set of communication protocols called TCP/IP (i.e., Transmission Control Protocol/Internet Protocol) to connect hosts. The Internet has a communications infrastructure known as the Internet backbone. Access to the Internet backbone is largely controlled by Internet Service Providers (ISPs) that resell access to corporations and individuals.

With respect to IP (Internet Protocol), this is a protocol by which data can be sent from one device (e.g., a phone, a PDA [Personal Digital Assistant], a computer, etc.) to another device on a network. There are a variety of versions of IP today, including, e.g., IPv4, IPv6, etc. Each host device on the network has at least one IP address that is its own unique identifier. IP is a connectionless protocol. The connection between end points during a communication is not continuous. When a user sends or receives data or messages, the data or messages are divided into components known as packets. Every packet is treated as an independent unit of data.

In order to standardize the transmission between points over the Internet or the like networks, an OSI (Open Systems Interconnection) model was established. The OSI model separates the communications processes between two points in a network into seven stacked layers, with each layer adding its own set of functions. Each device handles a message so that there is a downward flow through each layer at a sending end point and an upward flow through the layers at a receiving end point. The programming and/or hardware that provides the seven layers of function is typically a combination of device operating systems, application software, TCP/IP and/or other transport and network protocols, and other software and hardware.

Typically, the top four layers are used when a message passes from or to a user and the bottom three layers are used when a message passes through a device (e.g., an IP host device). An IP host is any device on the network that is capable of transmitting and receiving IP packets, such as a server, a router or a workstation. Messages destined for some other host are not passed up to the upper layers but are forwarded to the other host. The layers of the OSI model are listed below. Layer 7 (i.e., the application layer) is a layer at which, e.g., communication partners are identified, quality of service is identified, user authentication and privacy are considered, constraints on data syntax are identified, etc. Layer 6 (i.e., the presentation layer) is a layer that, e.g., converts incoming and outgoing data from one presentation format to another, etc. Layer 5 (i.e., the session layer) is a layer that, e.g., sets up, coordinates, and terminates conversations, exchanges and dialogs between the applications, etc. Layer 4 (i.e., the transport layer) is a layer that, e.g., manages end-to-end control and error-checking, etc. Layer 3 (i.e., the network layer) is a layer that, e.g., handles routing and forwarding, etc. Layer 2 (i.e., the data-link layer) is a layer that, e.g., provides synchronization for the physical level, does bit-stuffing and furnishes transmission protocol knowledge and management, etc. The Institute of Electrical and Electronics Engineers (IEEE) sub-divides the data-link layer into two further sub-layers, the MAC (Media Access Control) layer that controls the data transfer to and from the physical layer and the LLC (Logical Link Control) layer that interfaces with the network layer and interprets commands and performs error recovery. Layer 1 (i.e., the physical layer) is a layer that, e.g., conveys the bit stream through the network at the physical level. The IEEE sub-divides the physical layer into the PLCP (Physical Layer Convergence Procedure) sub-layer and the PMD (Physical Medium Dependent) sub-layer.

### Wireless Networks:

Wireless networks can incorporate a variety of types of mobile devices, such as, e.g., cellular and wireless telephones, PCs (personal computers), laptop computers, wearable computers, cordless phones, pagers, headsets, printers, PDAs, etc. For example, mobile devices may include digital systems to secure fast wireless transmissions of voice and/or data. Typical mobile devices include some or all of the following components: a transceiver (i.e., a transmitter and a receiver, including, e.g., a single chip transceiver with an integrated transmitter, receiver and, if desired, other functions); an antenna; a processor; one or more audio transducers (for example, a speaker or a microphone as in devices for audio communications); electromagnetic data storage (such as, e.g., ROM, RAM, digital data storage, etc., such as in devices where data processing is provided); memory; flash memory; a full chip set or integrated circuit; interfaces (such as, e.g., USB, CODEC, UART, PCM, etc.); and/or the like.

Wireless LANs (WLANs) in which a mobile user can connect to a local area network (LAN) through a wireless connection may be employed for wireless communications. Wireless communications can include, e.g., communications that propagate via electromagnetic waves, such as light, infrared, radio, microwave. There are a variety of WLAN standards that currently exist, such as, e.g., Bluetooth, IEEE 802.11, and HomeRF.

By way of example, Bluetooth products may be used to provide links between mobile computers, mobile phones, portable handheld devices, personal digital assistants (PDAs), and other mobile devices and connectivity to the Internet. Bluetooth is a computing and telecommunications industry specification that details how mobile devices can easily interconnect with each other and with non-mobile devices using a short-range wireless connection. Bluetooth creates a digital wireless protocol to address end-user problems arising from the proliferation of various mobile devices that need to keep data synchronized and consistent from one device to another, thereby allowing equipment from different vendors to work seamlessly together. Bluetooth devices may be named according to a common naming concept. For example, a Bluetooth device may possess a Bluetooth Device Name (BDN) or a name associated with a unique Bluetooth Device Address (BDA). Bluetooth devices may also participate in an Internet Protocol (IP) network. If a Bluetooth device functions on an IP network, it may be provided with an IP address and an IP (network) name. Thus, a Bluetooth Device configured to participate on an IP network may contain, e.g., a BDN, a BDA, an IP address and an IP name. The term "IP name" refers to a name corresponding to an IP address of an interface.

An IEEE standard, IEEE 802.11, specifies technologies for wireless LANs and devices. Using 802.11, wireless networking may be accomplished with each single base station supporting several devices. In some examples, devices may come pre-equipped with wireless hardware or a user may install a separate piece of hardware, such as a card, that may include an antenna. By way of example, devices used in 802.11 typically include three notable elements, whether or not the device is an access point (AP), a mobile station (STA), a bridge, a PCMCIA card or another device: a radio transceiver; an antenna; and a MAC (Media Access Control) layer that controls packet flow between points in a network.

In addition, Multiple Interface Devices (MIDs) may be utilized in some wireless networks. MIDs may contain two independent network interfaces, such as a Bluetooth interface and an 802.11 interface, thus allowing the MID to participate on two separate networks as well as to interface with Bluetooth devices. The MID may have an IP address and a common IP (network) name associated with the IP address.

Wireless network devices may include, but are not limited to Bluetooth devices, Multiple Interface Devices (MIDs), 802.11x devices (IEEE 802.11 devices including, e.g., 802.11a, 802.11b and 802.11g devices), HomeRF (Home Radio Frequency) devices, Wi-Fi (Wireless Fidelity) devices, GPRS (General Packet Radio Service) devices, 3G cellular devices, 2.5G cellular devices, GSM (Global System for Mobile Communications) devices, EDGE (Enhanced Data for GSM Evolution) devices, TDMA type (Time Division Multiple Access) devices, or CDMA type (Code Division Multiple Access) devices, including CDMA2000. Each network device may contain addresses of varying types including but not limited to an IP address, a Bluetooth Device Address, a Bluetooth Common Name, a Bluetooth IP address, a Bluetooth IP Common Name, an 802.11 IP Address, an 802.11 IP common Name, or an IEEE MAC address.

Wireless networks can also involve methods and protocols found in, e.g., Mobile IP (Internet Protocol) systems, in PCS systems, and in other mobile network systems. With respect to Mobile IP, this involves a standard communications protocol created by the Internet Engineering Task Force (IETF). With Mobile IP, mobile device users can move across networks while maintaining their IP Address assigned once. See Request for Comments (RFC) 3344. NB: RFCs are formal documents of the Internet Engineering Task Force (IETF). Mobile IP enhances Internet Protocol (IP) and adds means to forward Internet traffic to mobile devices when connecting outside their home network. Mobile IP assigns each mobile node a home address on its home network and a care-of-address (CoA) that identifies the current location of the device within a network and its subnets. When a device is moved to a different network, it receives a new care-of address. A mobility agent on the home network can associate each home address with its care-of address. The mobile node can send the home agent a binding update each time it changes its care-of address using, e.g., Internet Control Message Protocol (ICMP).

In basic IP routing (e.g., outside mobile IP), routing mechanisms rely on the assumptions that each network node always has a constant attachment point to, e.g., the Internet and that each node's IP address identifies the network link it is attached to. In this document, the terminology "node" includes a connection point, which can include, e.g., a redistribution point or an end point for data transmissions, and which can recognize, process and/or forward communications to other nodes. For example, Internet routers can look at, e.g., an IP address prefix or the like identifying a device's network. Then, at a network level, routers can look at, e.g., a set of bits identifying a particular subnet. Then, at a subnet level, routers can look at, e.g., a set of bits identifying a particular device. With typical mobile IP communications, if a user disconnects a mobile device from, e.g., the Internet and tries to reconnect it at a new subnet, then the device has to be reconfigured with a new IP address, a proper netmask and a default router. Otherwise, routing protocols would not be able to deliver the packets properly.

### Illustrative Architecture:

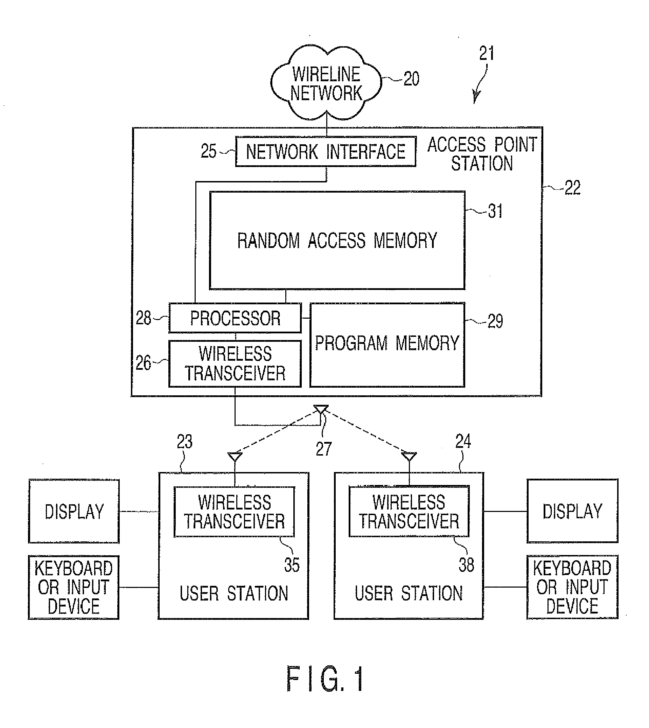

FIG. 1 depicts some illustrative architectural components that can be employed in some illustrative and non-limiting implementations including wireless access points to which client devices communicate. In this regard, FIG. 1 shows an illustrative wireline network 20 connected to a wireless local area network (WLAN) generally designated 21. The WLAN 21 includes an access point (AP) 22 and a number of user stations 23, 24. For example, the wireline network 20 can include the Internet or a corporate data processing network. For example, the access point 22 can be a wireless router, and the user stations 23, 24 can be, e.g., portable computers, personal desk-top computers, PDAs, portable voice-over-IP telephones and/or other devices. The access point 22 has a network interface 25 linked to the wireline network 21, and a wireless transceiver in communication with the user stations 23, 24. For example, the wireless transceiver 26 can include an antenna 27 for radio or microwave frequency communication with the user stations 23, 25. The access point 22 also has a processor 28, a program memory 29, and a random access memory 31. The user station 23 has a wireless transceiver 35 including an antenna 36 for communication with the access point station 22. In a similar fashion, the user station 24 has a wireless transceiver 38 and an antenna 39 for communication to the access point 22. By way of example, in some embodiments an authenticator could be employed within such an access point (AP) and/or a supplicant or peer could be employed within a mobile node or user station.

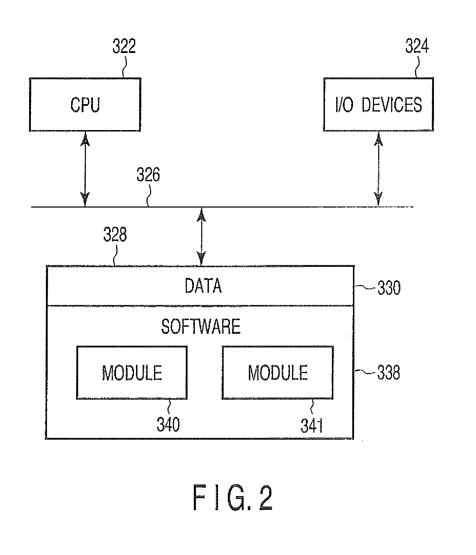

FIG. 2 shows an illustrative computer or control unit that can be used to implement computerized process steps, to be carried out by devices, such as, e.g., an access point, an information server and/or a user station, in some embodiments. In some embodiments, the computer or control unit includes a central processing unit (CPU) 322, which can communicate with a set of input/output (I/O) device(s) 324 over a bus 326. The I/O devices 324 can include, for example, a keyboard, monitor, and/or other devices. The CPU 322 can communicate with a computer readable medium (e.g., conventional volatile or non-volatile data storage devices) 328 (hereafter "memory 328") over the bus 326. The interaction between a CPU 322, I/O devices 324, a bus 326, and a memory 328 can be like that known in the art. Memory 328 can include, e.g., data 330. The memory 328 can also store software 338. The software 338 can include a number of modules 340 for implementing the steps of processes. Conventional programming techniques may be used to implement these modules. Memory 328 can also store the above and/or other data file(s). In some embodiments, the various methods described herein may be implemented via a computer program product for use with a computer system. This implementation may, for example, include a series of computer instructions fixed on a computer readable medium (e.g., a diskette, a CD-ROM, ROM or the like) or transmittable to a computer system via and interface device, such as a modem or the like. A communication medium may be substantially tangible (e.g., communication lines) and/or substantially intangible (e.g., wireless media using microwave, light, infrared, etc.). The computer instructions can be written in various programming languages and/or can be stored in memory device(s), such as semiconductor devices (e.g., chips or circuits), magnetic devices, optical devices and/or other memory devices. In the various embodiments, the transmission may use any appropriate communications technology.

### Media Independent Handover Services:

In I.E.E.E. P802.21/D.01.09, September 2006, entitled Draft IEEE Standard for Local and Metropolitan Area Networks: Media Independent Handover Services, among other things, the document specifies 802 media access-independent mechanisms that optimize handovers between 802 systems and cellular systems. The I.E.E.E. 802.21 standard defines extensible media access independent mechanisms that enable the optimization of handovers between heterogeneous 802 systems and may facilitate handovers between 802 systems and cellular systems. "The scope of the IEEE 802.21 (Media Independent Handover) standard is to develop a specification that provides link layer intelligence and other related network information to upper layers to optimize handovers between heterogeneous media. This includes links specified by 3GPP, 3GPP2 and both wired and wireless media in the IEEE 802 family of standards. Note, in this document, unless otherwise noted, "media" refers to method/mode of accessing a telecommunication system (e.g. cable, radio, satellite, etc.), as opposed to sensory aspects of communication (e.g. audio, video, etc.)." See 1.1 of I.E.E.E. P802.21/D.01.09, September 2006, entitled Draft IEEE Standard for Local and Metropolitan Area Networks: Media Independent Handover Services, the entire contents of which document is incorporated herein into and as part of this patent application. In this regard, the entire disclosure of co-pending provisional application Serial No. 60/825,567 filed on September 13, 2006, entitled MIH Protocol State Machine, including Appendices is incorporated herein by reference for background, including the contents of IEEE 802.21 incorporated therein.

### Media Independent Information Service:

As detailed in the 802.21 draft standard, the Media Independent Information Service (MIIS) provides a framework and corresponding mechanisms by which an MIHF entity may discover and obtain network information existing within a geographical area to facilitate handovers.

Additionally or alternatively, the neighboring network information discovered and obtained by this framework and mechanisms can also be used in conjunction with user and network operator policies for optimum initial network selection and access (attachment), or network re-selection in idle mode.

MIIS primarily provides a set of information elements (IEs), the information structure and its representation, and a query/response type of mechanism for information transfer. The information can be present in some information server from which, e.g., an MIHF in the Mobile Node (MN) can access it.

As detailed in the 802.21 draft standard, the MIIS provides a framework by which an MIHF, residing in the MN or in the network, can discover and obtain network information within a geographical area to facilitate network selection and handovers. The objective is to acquire a global view of all the heterogeneous networks relevant to the MN in the area to facilitate seamless roaming across these networks.

Media Independent Information Service includes support for various Information Elements (IEs). Information Elements provide information that is essential for a network selector to make intelligent handover decisions.

Depending on the type of mobility, support for different types of information elements may be necessary for performing handovers. MIIS provides the capability for obtaining information about lower layers such as neighbor maps and other link layer parameters, as well as information about available higher layer services such as Internet connectivity.

MIIS provides a generic mechanism to allow a service provider and a mobile user to exchange information on different handover candidate access networks. The handover candidate information can include different access technologies such as IEEE 802 networks, 3GPP networks and 3GPP2 networks. The MIIS also allows this collective information to be accessed from any single network. For example, by using an IEEE 802.11 access network, it can be possible to get information not only about all other IEEE 802 based networks in a particular region but also about 3GPP and 3GPP2 networks. Similarly, using, e.g., a 3GPP2 interface, it can be possible to get access to information about all IEEE 802 and 3GPP networks in a given region. This capability allows the MN to use its currently active access network and inquire about other available access networks in a geographical region. Thus, a MN is freed from the burden of powering up each of its individual radios and establishing network connectivity for the purpose of retrieving heterogeneous network information.

MIIS enables this functionality across all available access networks by providing a uniform way to retrieve heterogeneous network information in any geographical area.

A main goal behind the Information Service is to allow MNs and network entities to discover information that may influence the selection of appropriate networks during handovers. This information is intended to be primarily used by a policy engine entity that may make effective handover decisions based on this information.

This Information Service provides mostly static information, although network configuration changes are also accounted for. Other dynamic information about different access networks, such as current available resource levels, state parameters, and dynamic statistics should be obtained directly from the respective access networks. Some of the significant motivations behind the Information Service are as follows:
1) Provide information about the availability of access networks in a geographical area. Further, this information could be retrieved using any wireless network, for example, information about a nearby Wi-Fi hotspot could be obtained using a global system for mobile communication (GSM), CDMA, or any other cellular network, whether by means of request/response signaling, or by means of information that is specifically or implicitly broadcast over those cellular networks. Alternatively, this information could be maintained in an internal database on the MN.
2) Provide static link layer information parameters that could help the mobile nodes in selecting the appropriate access network. For example, knowledge of whether security and QoS are supported on a particular access network may influence the decision to select such an access network during handovers.
3) Provide information about capabilities of different PoAs in neighbor reports to aid in configuring the radios optimally (to the extent possible) for connecting to available/selected access networks. For example, knowing about supported channels by different PoAs may help in configuring the channels optimally as opposed to scanning or beaconing and then finding out this information. However, for the most part, dynamic link layer parameters have to be obtained or selected based on direct interaction with the access networks as the Information Service may not be able to help much in this regard.
4) Provide an indication of higher layer services supported by different access networks and core networks that may aid in making handover decisions. Such information may not be available (or could not be made available) directly from the MAC sub-layer or PHY of specific access networks, but could be provided as part of the Information Service. For example in certain cases classification of different networks into categories such as public, enterprise, home, and others may influence a handover decision. Other information here may be more vendor/network specific in nature and could be specified in that form.

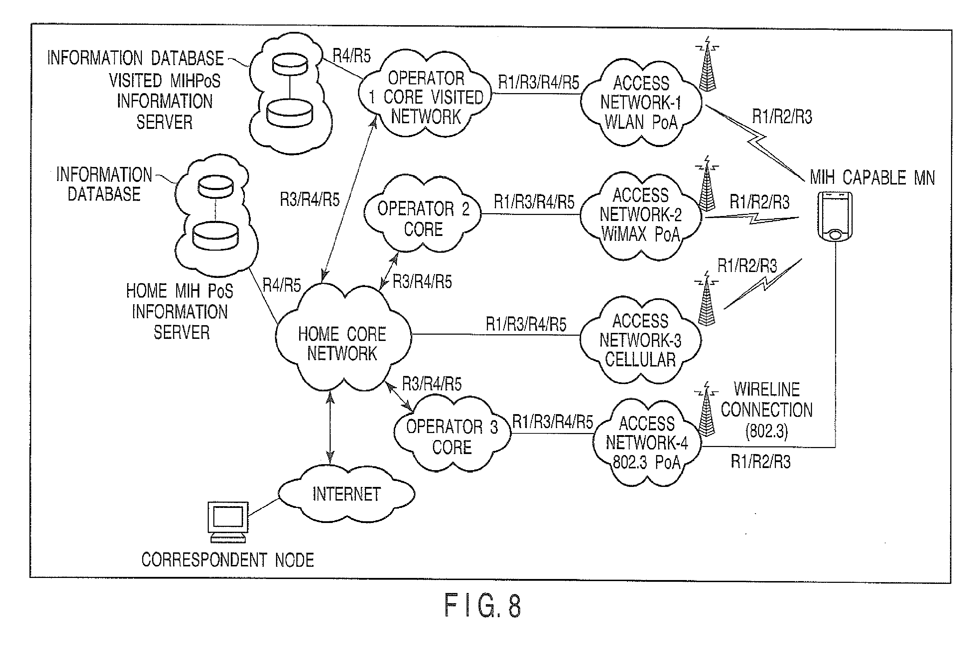

Deployment Example of MIH Services:
The 802.21 draft standard sets forth the following example of a network model including MIH services as depicted in FIG. 8 to help illustrate the MIH Reference Points. The draft standard explains that moving from left to right, an illustrative model includes an MIH-capable mobile node (MN, shown at the far right) that supports multiple wired and wireless access technologies. The illustrative model assumes that the serving network either operates multiple link-layer technologies or allows its user to roam into other networks when a service level agreement (SLA) in support of inter-working has been established. The depicted model shows some illustrative access networks that are connected in, e.g., a loose, serial way to a given core network (e.g., Core Operator 1, 2, or 3). The depicted model also shows an illustrative access network that is more tightly coupled (Access Network-3). Although not shown in FIG. 8, an access network can also connect to a core network via the Internet. Each Core Operator network (e.g., 1, 2, or 3) can represent, for example, a service provider, a corporate Intranet provider, or, e.g., just another part of the visited or home access. In this illustrative model, the provisioning provider is operating Access Network-3, which couples the terminal to the core (labeled Home Core Network) via R1. At any given point in time, the subscriber's serving network may be the home subscriber network or a visited network.

The network providers offer MIH services in their access networks (Access Network-1 to 4) in order to facilitate heterogeneous handovers into their networks. Each access technology either advertises its MIH capability or responds to MIH service discovery. Each service provider for these access networks allows access to one or more MIH Points of Service (PoS) node(s). These PoS nodes may provide some or all of the MIH services as determined during the MIH capabilities discovery. The PoS location may vary based on the operator deployment scenario and the technology-specific MIH architecture.

An MIH PoS may reside next to, or co-located with, the point of attachment (PoA) node in the access network (e.g., Access Network 1, 2, 4). Alternatively, the PoS may reside deeper inside the access or core networks (e.g., Access Network 3). As shown in FIG. 8, the MIH entity in the MN can communicate with MIH network entities using reference points R1, R2, or R3 over any of the available access network. If the PoA in the serving access network has a co-located MIHF, the RP1 reference point terminates at the PoA which is also the PoS (MN to Access Network 1, 2, 4 of the model can all be RP1). In that case, an R3 reference point would be terminated at any non-PoA (illustrated by MN connectivity to Access Networks 1, 2, 4). MIH events may originate at both sides of an active R1 link. The MN is typically the first node to react to these events.

The interaction of visited and home subscriber networks could be either for control and management purposes or for data transport purposes. It is also possible that due to roaming or SLA agreements, the home subscriber network may allow the MN to access the public Internet directly through a visited network. As illustrated, two MIH network entities may communicate with each other via R4 or R5 reference points. The MIH capable PoA may also communicate with other MIH network entities via R4 and R5 reference points. The MIH capable MN could have an MIH communication with other PoA in the candidate access networks via RP2 reference point to obtain Information Services about the candidate network.

With regard to the MIH Information Service, visited providers can offer access to their information server located in an MIH PoS node (upper far right). The operator provides the MIIS to mobile nodes so they can obtain pertinent information including, but not limited to, new roaming lists, costs, provider identification information, provider services, priorities and any other information that would enable the selection and utilization of these services. Asillustrated, it is possible for the MN to be pre-provisioned with MIIS data by its provider. It is also possible for the MN to obtain MIH Information Services from any access network of its provider or visited networks that maintain SLA agreements with the provisioner. MIIS could also be available from another overlapping or nearby visited network, using that network's MIIS point of service. The serving network may utilize R4 and R5 interfaces to access other MIH entities. As an example, in FIG. 8 the home subscriber network may access its own MIH information server or core operator 1 (visited network) MIH information server.

### Access Information Service Before Authentication:

As indicated in the 802.21 draft standard, with certain access networks an MN should be able to obtain IEEE 802.21 related information elements before the MN is authenticated with the PoA. These information elements may be used by the handover policy function to determine if the PoA can be selected. In order to enable the information query before authentication, individual link technologies may provide an L2 or media-specific transport or a protocol message exchange that makes this MIIS query exchange possible between the user equipment (MN) and a certain MIHF in the network. The MIHF in the MN discovers the MIH capability support from the PoA through the media-specific broadcast information containing the system capabilities. It is noted that the pre-authentication query facility is provided only for MIH information query and cannot be used for carrying other MIH protocol services except MIES and/or MICS capability discovery query using MIH_Capability_Discover embedded into L2 management frames. Additionally, any MIHF within the network may request for the set of information elements from a peer MIHF located in the same or a different network using the MIH protocol.

Allowing access of information service before authentication carries certain security risks such as denial-of-service attacks and exposure of information to unauthorized MNs. In such scenarios, the information service provider may limit the scope of information accessible to an unauthenticated MN.

After authentication and attachment to a certain PoA, the MIH protocol may be used for information retrieval by use of data frames specific to that media technology.

In any case, the MIHF should have the knowledge of whether or not a network supports this standard, and may obtain this knowledge by means of media independent or media-specific discovery mechanisms.

Information Elements:
The 802.21 draft standard also sets forth that Information Service elements are classified into three groups:
   1) General Information and Access Network Specific Information: These information elements give a general overview of the different networks providing coverage within an area. For example, a list of available networks and their associated operators, roaming agreements between different operators, cost of connecting to the network and network security and quality of service capabilities.
   2) PoA Specific Information: These information elements provide information about different PoAs for each of the available access networks. These IEs include PoA addressing information, PoA location, data rates supported, the type of PHY and MAC layers and any channel parameters to optimize link layer connectivity. This may also include higher layer services and individual capabilities of different PoAs.
   3) Other information that may be access network specific, service specific, or vendor/network specific. The 802.21 standard sets forth a list of information element containers that are used in TLV based query method. As set forth in the draft 802.21 standard, the Mobile-initiated Handover Procedure operates as follows:
      1) Mobile Node is connected to the serving network via Current PoS and it has access to MIH Information Server.
      2) Mobile Node queries information about neighboring networks by sending the MIH_Get_Information Request to Information Server. Information Server responds with MIH_Get_Information Response. This information query may be attempted as soon as Mobile Node is first attached to the network.
      3) Mobile Node triggers a mobile-initiated handover by sending a MIH_MN_HO_Candidate_Query Request to Serving PoS. This request contains the information of potential candidate networks.
      4) Serving PoS queries the availability of resources at the candidate networks by sending MIH_N2N_HO_Query_Resources Request to one or multiple Candidate PoSs.
      5) Candidate PoSs respond with MIH_N2N_HO_Query_Resources Response and Serving PoS notifies the Mobile Node of the resulting resource availability at the candidate networks through MIH_MN_HO_Candidate_Query Response.
      6) Mobile Node decides the target of the handover and commits a link switch to the target network interface.

As also set forth in the draft 802.21 standard, the Network-initiated Handover Procedure operates as follows:
1) Serving PoS sends MIH_Get_Information Request to Information Server to get neighboring network information and Information Server responds by sending MIH_Get_Information Response.
2) Serving PoS triggers a network-initiated handover by sending MIH_Net_HO_Candidate_Query Request to Mobile Node. The MN responds through MIH_Net_HO_Candidate_Query Response which contains Mobile Node's acknowledgement about the handover and its preferred link and PoS lists.
3) Serving PoS sends MIH_N2N_HO_Query_Resources Request to one or more Candidate PoSs to check the availability of the resource at candidate networks. Candidate PoS responds by sending MIH_N2N_HO_Query_Resources Response to Serving PoS.
4) Serving PoS decides the target of the handover based on the available resource status at candidate networks.
5) Serving PoS sends MIH_N2N_HO_Commit Request to Target PoS to prepare resource at the target network. Target PoS responds the result of the resource preparation by sending MIH_N2N_HO_Commit Response.
6) After identifying that resource is successfully prepared, Serving PoS commands Mobile Node to commit handover toward the specified network type and PoA through MIH_Net_HO_Commit Request.

### Disclosure of Invention

The present invention improves upon the above and/or other background technologies and/or problems therein.

According to some embodiments, a system is provided for providing network information regarding access networks to which a mobile node may access prior to authentication of the mobile node to one of the access networks, in which: a) the system being configured to receive a query of a mobile node related to cost of networks to which the mobile node may access prior to authentication of the mobile node to one of the access networks; b) the system being configured to store cost information related to the access networks to which the mobile node may access; c) the system having a currency conversion mechanism that converts a currency to a converted currency for the mobile node related to the cost of at least one of the access networks to which the mobile node may access; d) the system sending a response for the mobile node including the converted currency prior to authentication of the mobile node with one of the access networks.

In some examples, the system includes an Information Server that collects network information related to access networks to which mobile nodes may access. In some examples, the system further includes a database for storing the cost information for the Information Server. In some examples, the system is configured with a currency conversion function (CCF) that converts a currency for the mobile node. In some examples, the system is configured to establish a Currency Conversion Table (CCT). In some examples, the Currency Conversion Table includes exchange rates between source currencies and target currencies. In some examples, the Information Server is configured to receive a Currency TLV from a mobile node and to transmit an Information Response TLV having the converted currency. In some examples, the Currency TLV includes a currency code.

According to some other embodiments, a system for providing network information regarding access networks to which a mobile node may access prior to authentication of the mobile node to one of the access networks is provided that includes: a) a mobile node configured to send a query related to cost of networks to which the mobile device may access prior to authentication of the mobile node to one of the access networks; b) the mobile node being configured to receive a response including a converted currency related to the cost of at least one of the access networks to which the mobile node may access; and c) the mobile node being configured to authenticate with at least one of the access networks based on the converted currency. In some examples, the mobile node being configured to send a query includes the mobile node being configured to transmit a Currency TLV to an Information Server. In some examples, the Currency TLV includes a currency code.

According to some other embodiments, a method performed prior to authentication of a mobile device with an access network, comprising: prior to attachment of the mobile device with the access network, having the mobile device receive cost conversions for network access included as part of network neighborhood information. In some examples, the method further includes having the mobile device transmit a Currency TLV in an Information Request TLV. In some examples, the method further includes having the Currency TLV include a currency code.

According to some embodiments, a method is employed that includes providing a currency conversion mechanism for a mobile accessing a network in a foreign jurisdiction such that the mobile does not require knowledge of an exchange rate between the currencies used in visited and home jurisdictions.

According to some embodiments, a method is employed for performing a media independent handover of a wireless mobile device in which cost for network access is included as part of network neighborhood information, comprising: including a Currency TLV in Information Request TLV. In some embodiments, the Currency Type TLV contains a three-letter currency code specified by ISO 4217. In some embodiments, if a Currency TLV is contained in an Information Request TLV, the currency indicated in the Currency TLV is used for Cost IEs carried in an Information Response TLV. In some embodiments, if a Currency Type TLV is not contained in an Information Request TLV, the currency that is used in the country where the access network is deployed is used for Cost IEs carried in an Information Response TLV.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### Brief Description of Drawings

FIG. 1 is an illustrative architectural diagram showing some structure that can be employed in some embodiments;
FIG. 2 shows an illustrative computer or control unit that can be used to implement computerized process steps, to be carried out by devices, such as, e.g., an access point, an information server and/or a user station, in some embodiments;
FIG. 3 shows an illustrative currency conversion function (e.g., which can be implemented as a software module or via other means) for converting currency values from, e.g., a local currency to multiple currencies for an Information Server Database;
FIG. 4 shows an illustrative currency conversion table (CCT) that can be stored in a database for converting currency values from, e.g., a local currency to, e.g., multiple currencies for an Information Server Database;
FIGS. 5 and 6 depict some illustrative TLVs that are to be transmitted by a Mobile Device in, e.g., an MIH_Information request message, with the TLV shown in FIG. 6 being carried in the TLV shown in FIG. 5;
FIGS. 7A, 7B and 7C are a chart showing some illustrative ISO currency codes for reference; and
FIG. 8 is an architectural diagram showing an illustrative network model including MIH services as set forth in the 802.21 draft standard for reference.

### Best Mode for Carrying Out the Invention

Embodiments of the present invention are shown by way of example and not limitation in the accompanying figures.

While the present invention may be embodied in many different forms, a number of illustrative embodiments are described herein with the understanding that the present disclosure is to be considered as providing examples of the principles of the invention and that such examples are not intended to limit the invention to preferred embodiments described herein and/or illustrated herein.

### Overcoming Existing Problems:

Among other things, IEEE 802.21 defines "cost" for network access as part of network neighborhood information.

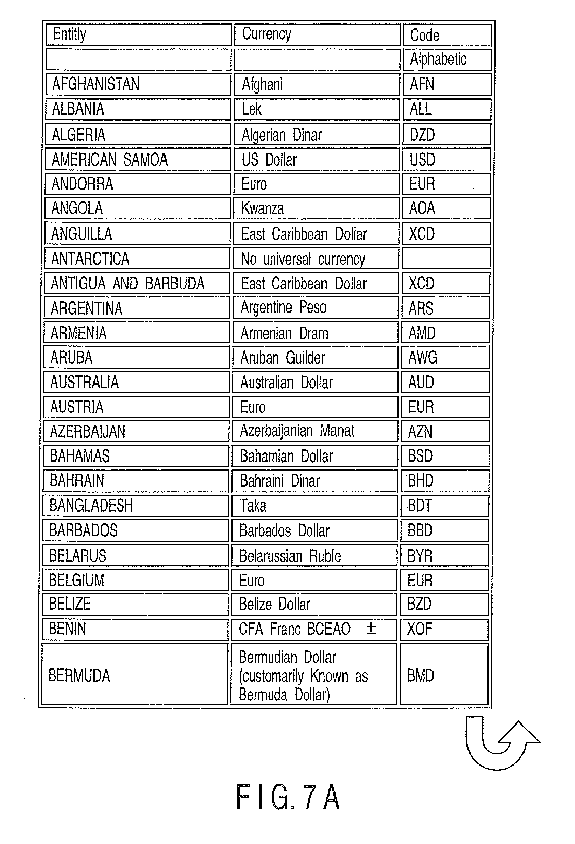

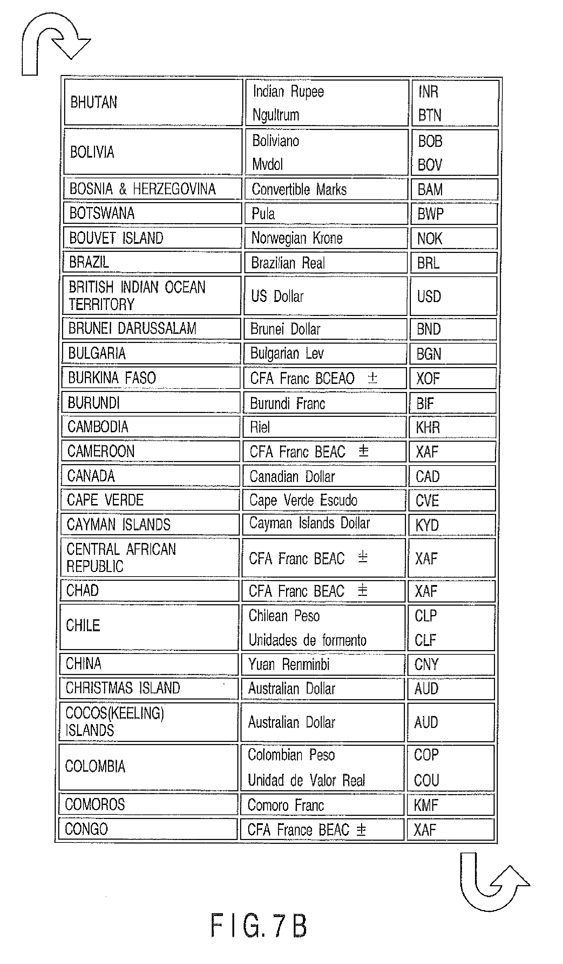

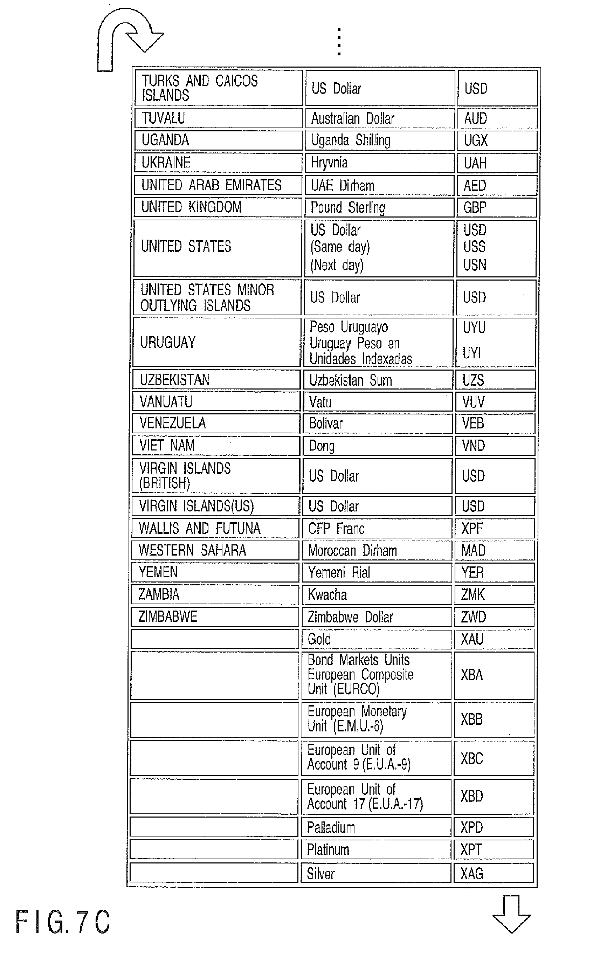

In this regard, Cost = (Unit, Value, Currency). Currency is a three-letter currency code (e.g., "USD") specified by ISO 4217 [ISO 4217]. In this regard, ISO 4217 is the international standard describing three letter codes (also known as the currency code) to define the names of currencies established by the International Organization for Standardization (ISO). The ISO 4217 code list is the established norm in banking and business all over the world for defining different currencies, and in many countries the codes for the more common currencies are so well known publicly, that exchange rates published in newspapers or posted in banks use only these to define the different currencies, instead of translated currency names or ambiguous currency symbols. The first two letters of the code are the two letters of ISO 3166-1 alpha-2 country codes (which are similar to those used for national top-level domains on the Internet) and the third is usually the initial of the currency itself. For reference, FIGS. 7A, 7B and 7C show some illustrative ISO values.

In the context of the preferred embodiments described herein, the cost is an attribute associated with an access network.

By way of example, if a user whose home operator is in country X is visiting country Y, a cost for a visited network is typically represented using the currency used in country Y.

In this regard, prior to the present invention, the user would need to perform currency conversion to know how much it is in the currency used in the home country. Among other things, this requires the user to know the exchange rate between the currencies used in visited and home countries.

Accordingly, there is a need for a mechanism that does not require the user to know the exchange rate.

The Solution Framework of the Preferred Embodiments:

In the preferred embodiments, a Mobile Device is seeking network access, and in accordance with the draft standard of 802.21, an Information Server (IS) is employed. In some examples, the Information Server can be implemented on an Access Point or on any other node in the network. In some preferred embodiments, query and responses are exchanged between the Mobile Device and the Information Server. In some embodiments, if the Information Server is implemented on a node other than the AP, then the AP can relay the query and response back and forth between the Mobile Device and the Information Server, and the query and response exchange can be performed before the mobile device attaches to the Access Point. While under the 802.21 draft standard, the Information Server can be used for a variety of Information Service elements, in embodiments of the present invention, which relate to currency conversions, such an Information Server would at least accommodate cost related information necessary to carry out embodiments of the invention.

In the preferred embodiments, the Mobile Device will make a simple query regarding its desired currency. For example, a simple query could be, e.g., for a certain cost in a certain currency. For example, a simple query could be, e.g.: COST < 1000JPY.

In this regard, reference is made to two cases as set forth below.
- In a first case, Case 1, the IS client (e.g., a mobile device, such as, e.g., a PDA, portable or lap top computer, cellular phone, etc.) specifies a currency in a query:
   - Here, the specified currency is used as the unit for representing cost values.
- In a second case, Case 2, the IS client does not specify a currency type in a query:
   - Here, the "local currency" is used the unit for representing cost values.
      • Local currency: the currency used in the country where the access network is deployed.
- Cost values that are associated with a particular access network and represented in different currencies are the same under a single currency -- i.e.:
   - C(C1) * R(C1,C2) = C(C2) [for all C1, C2]
      • C(X): Cost value represented in currency X;
      • R(X,Y): Exchange rate from currency X to currency Y.
- In the preferred embodiments, a currency conversion mechanism is defined (see the following sections).

Currency Conversion Mechanisms of the Preferred Embodiments:

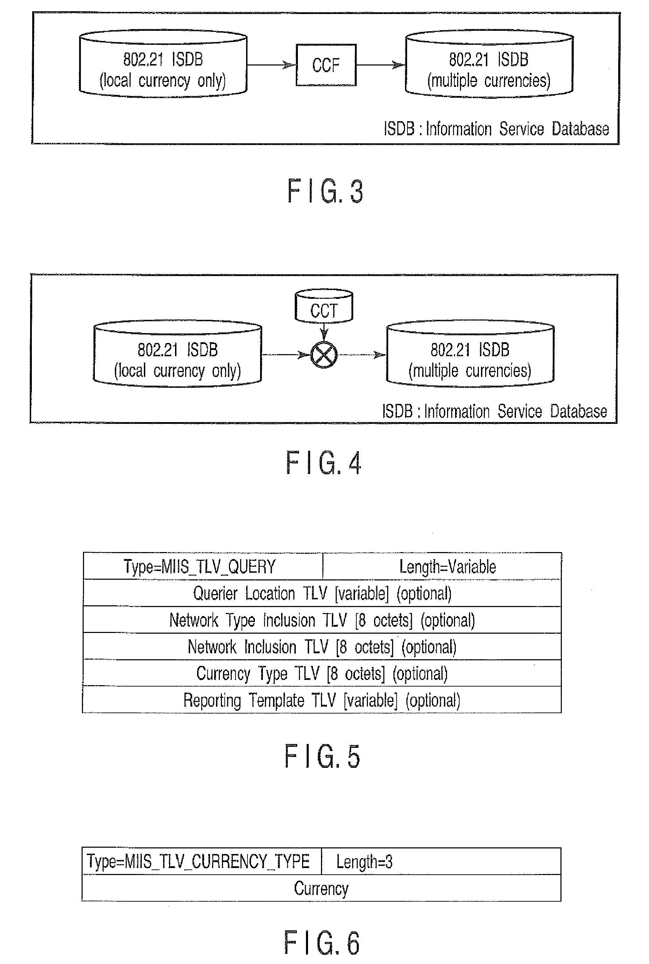

With reference to FIG. 3, according to some embodiments, a currency conversion mechanism can include features as set forth below. In this regard, FIG. 3 shows an illustrative currency conversion function (e.g., which can be implemented as a software module or via other means) for converting currency values from, e.g., a local currency to, e.g., multiple currencies for an Information Server Database.
• In this regard, we define a Currency Conversion Function (CCF).
• Here, CCF: (Cs,Ct) ◇ Rst
- Cs is the Source Currency, Ct is the Target Currency, and Rst is the Exchange Rate.
- Ct = Cs*Rst
• According to a first mechanism, Mechanism 1, CCF is defined as part of database query language.
- E.G., "Give me information on access networks for which COST*CCF(JPY,USD) < 10." For example, the Mobile Node can make a simple query with specifying its desired currency (e.g., COST < 1000 JPY)(e.g., this could be its local currency, but does not necessarily need to be the local currency). The Information Server then converts the simple query into a query with CCF such as, e.g., above COST*CCF(JPY,USD) < 10.
• According to a second mechanism, Mechanism 2, CCF is defined independently of database query language.
- Using the Currency Conversion Function (CCF), the original database with a single currency is modified to have multiple currencies.
* An illustrative example of Mechanism 2 can involve, e.g., that the original database has cost data based on JPY. Then, the database management system creates, for each currency X, cost data Y based on the currency X, where Y+CCF(JPY, X) and CCF is given to the database management system independently of the database language. Here, in an illustrative example, the original cost data (based on JPY) could be:

| COST (Y) | CURRENCY (X) |
|---|---|
| - - - - - - -+- - - - - - - - - | |
| 1000 | JPY |

And, the cost data based on currency X (X=USD, CCF(JPY,X)=0.01) :

| COST (Y) | CURRENCY (X) |
|---|---|
| - - - - - - -+- - - - - - - - - | |
| 10 | USD |

And, the cost data based on currency X (X=EUR, CCF(JPY,X)=0.008) :

| COST (Y) | CURRENCY (X) |
|---|---|
| - - - - - - -+- - - - - - - - - | |
| 8 | EUR |

- In both mechanisms, the Currency Conversion Function (CCF) does not have to be part of the 802.21specification.
   - It is rather related to how to construct the Information Server and its database (i.e., it is an implementation issue).

Embodiments Employing a Variation of Mechanism 2 (CCF as a Database Table):

With reference to FIG. 4, according to some embodiments, a variation of Mechanism 2 can include features as set forth below. In this regard, FIG. 4 shows an illustrative currency conversion table (CCT) that can be stored in a database for converting currency values from, e.g., a local currency to, e.g., multiple currencies for an Information Server Database.
- Here, a Currency Conversion Table (CCT) is established.
- In the preferred embodiments, the CCT is configured to have records of, e.g., three tuples: (Cs, Ct, Rst).
- In the preferred embodiments, the CCT is locally maintained within a database management system.
   - The CCT is used for generating a list of cost values represented in multiple currencies from the cost value represented in the local currency.

In this variation of Mechanism 2, the CCF can, thus, be based on a database table. An illustrative example of such a database table is, e.g., shown below.

| Cs | Ct | Rst |
|---|---|---|
| - - - - - - -+- - - - - - - - -+- - - - - - - - - | | |
| JPY | USD | 0.01 |
| JPY | EUR | 0.008 |
| USD | JPY | 100 |
| EUR | JPY | 125 |
| USD | EUR | 1.25 |
| EUR | USD | 0.8 |

### Proposed Changes to 802.21 Draft:

FIGS. 5 and 6 depict some illustrative TLVs that are to be transmitted by a Mobile Device in, e.g., an MIH_Information request message, with the TLV shown in FIG. 6 being carried in the TLV shown in FIG. 5.

With reference to FIG. 5, according to some embodiments, proposed changes to the 802.21 draft can include features as set forth below:
- Include one optional Currency TLV in Information Request TLV defined in Section 6.4.6.1, such as, e.g., indicated below in FIG. 5.

Once again, in the example shown in FIG. 5, the TLV is transmitted by a Mobile Device in, e.g., an MIH_Information request message.

With reference to FIG. 5, as to the "Querier Location TLV [variable] (optional)" TLV, this this TLV carries, e.g., the location of the mobile device.

With reference to FIG. 5, as to the "Network Type Inclusion TLV [8 octets] (optional)" TLV, this TLV carries, e.g., a list of network types of the networks on which the mobile device wants information.

With reference to FIG. 5, as to the "Network Inclusion TLV [8 octets] (optional)" TLV, this TLV carries, e.g., a list of network identifiers of the networks on which the Mobile Device wants information.

With reference to FIG. 5, as to the "Currency Type TLV [8 octets] (optional)" TLV, this TLV carries, e.g., the currency type specified by the mobile device. An illustrative example of this actual TLV is shown in FIG. 6 discussed below.

With reference to FIG. 5, as to the "Reporting Template TLV [variable] (optional)" TLV, this TLV carries, e.g., a list of types of the information elements on which the mobile device wants information.

With reference to FIG. 6, according to some embodiments additional proposed changes to the 802.21 draft can include, e.g., defining a Currency TLV as shown in FIG. 6 (e.g., Currency Type TLV). In particular, FIG. 6 shows the definition of an illustrative Currency Type TLV that is carried in an MIIS_TLV_QUERY TLV. In this regard, e.g., the following text can be added to Section 6.4.6 of the 802.21 draft: Currency TLV is defined as shown in FIG. 6.

In some preferred embodiments, the Currency TLV involves a Currency Type TLV that contains a three-letter currency code (e.g., "USD") specified by ISO 4217 [ISO 4217]. For reference, FIGS. 7A, 7B and 7C show a list of some exemplary ISO 4217 currency codes.

In some preferred embodiments, if a Currency TLV is contained in an Information Request TLV, the currency indicated in the Currency TLV shall be used for Cost IEs carried in an Information Response TLV. In some preferred embodiments, if a Currency Type TLV is not contained in an Information Request TLV, the currency that is used in the country where the access network is deployed shall be used for Cost IEs carried in an Information Response TLV.

### Broad Scope of the Invention:

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims (e.g., including that to be later added) are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure, the following abbreviated terminology may be employed: "e.g." which means "for example."

Further embodiments are set out in the following clauses:
1. A system for providing network information regarding access networks to which a mobile node may access prior to authentication of the mobile node to one of the access networks, comprising:
   a) said system being configured to receive a query of a mobile node related to cost of networks to which the mobile node may access prior to authentication of the mobile node to one of the access networks;
   b) said system being configured to store cost information related to the access networks to which the mobile node may access;
   c) said system having a currency conversion mechanism that converts a currency to a converted currency for the mobile node related to the cost of at least one of the access networks to which the mobile node may access;
   d) said system sending a response for the mobile node including the converted currency prior to authentication of the mobile node with one of the access networks.
2. The system of clause 1, wherein said system includes an Information Server that collects network information related to access networks to which mobile nodes may access.
3. The system of clause 2, further including a database for storing the cost information for the Information Server.
4. The system of clause 1, wherein the system is configured with a currency conversion function (CCF) that converts a currency for the mobile node.
5. The system of clause 1, wherein said system is configured to establish a Currency Conversion Table (CCT).
6. The system of clause 5, wherein said Currency Conversion Table includes exchange rates between source currencies and target currencies.
7. The system of clause 2, wherein the Information Server is configured to receive a Currency TLV from a mobile node and to transmit an Information Response TLV having the converted currency.
8. The system of clause 7, wherein said Currency TLV includes a currency code.
9. A system for providing network information regarding access networks to which a mobile node may access prior to authentication of the mobile node to one of the access networks, comprising:
   a) a mobile node configured to send a query related to cost of networks to which the mobile device may access prior to authentication of the mobile node to one of the access networks;
   b) said mobile node being configured to receive a response including a converted currency related to the cost of at least one of the access networks to which the mobile node may access; and
   c) said mobile node being configured to authenticate with at least one of the access networks based on the converted currency.
10. The system of clause 9, including that said mobile node being configured to send a query includes said mobile node being configured to transmit a Currency TLV to an Information Server.
11. The system of clause 10, wherein said Currency TLV includes a currency code.
12. A method performed prior to authentication of a mobile device with an access network, comprising: prior to attachment of the mobile device with the access network, having the mobile device receive cost conversions for network access included as part of network neighborhood information.
13. The method of clause 12, further including having the mobile device transmit a Currency TLV in an Information Request TLV.
14. The method of clause 13, further including having the Currency TLV include a currency code.
15. The method of clause 14, further including using a currency indicated in the Currency TLV in the Information Request TLV for Cost IEs carried in an Information Response TLV.
16. The method of clause 11, further including if a Currency TLV is not contained in an Information Request TLV, a currency that is used in the region where the access network is deployed is used for Cost IEs carried in an Information Response TLV.
17. A method, comprising: providing a currency conversion mechanism for a mobile prior to authenticating with and accessing a network in a foreign jurisdiction such that the mobile does not require knowledge of an exchange rate between the currencies used in visited and home jurisdictions.
18. A method of performing a media independent handover of a wireless mobile device in which cost for network access is included as part of network neighborhood information, comprising: including a Currency TLV in an Information Request TLV.
19. The method of clause 18, wherein the Currency TLV contains a currency code.
20. The method of clause 18, wherein if a Currency TLV is contained in an Information Request TLV, a currency indicated in the Currency TLV is used for Cost IEs carried in an Information Response TLV.
21. The method of clause 18, wherein if a Currency TLV is not contained in an Information Request TLV, a currency that is used in the region where the access network is deployed is used for Cost IEs carried in an Information Response TLV.

## Claims

1. A method for providing network information regarding access networks to which a mobile node may access, comprising:
a) receiving a query of a mobile node related to cost of networks to which the mobile node may access;
b) converting a currency to a converted currency for the mobile node related to the cost of at least one of the access networks to which the mobile node may access by a currency conversion mechanism;
c) sending the network information for the mobile node including the converted currency.

2. The method of claim 1, wherein said method includes collecting network information related to access networks to which mobile nodes may access.

3. The method of claim 1, wherein said method includes converting by a currency conversion function (CCF) that converts a currency for the mobile node.

4. The method of claim 1, wherein said method includes establishing a Currency Conversion Table (CCT).

5. The method of claim 4, wherein said Currency Conversion Table includes exchange rates between source currencies and target currencies.

6. The system of claim 2, wherein said method includes receiving a Currency TLV from a mobile node and to transmit an Information Response TLV having the converted currency.

7. The system of claim 6, wherein said Currency TLV includes a currency code.

8. A method for providing network information regarding access networks to which a mobile node may access, comprising:
a) a mobile node sending a query related to cost of networks to which the mobile device may access;
b) said mobile node receiving a response including a converted currency related to the cost of at least one of the access networks to which the mobile node may access; and
c) said mobile node authenticating with at least one of the access networks based on the converted currency.

9. The method of claim 8, including that said mobile node sending a query includes said mobile node being configured to transmit a Currency TLV to an Information Server.

10. The method of claim 9, wherein said Currency TLV includes a currency code.
